# EUROPÄISCHE PATENTSCHRIFT

(11) **EP 1 610 987 B1**
(45) Veröffentlichungstag und Bekanntmachung des Hinweises auf die Patenterteilung: **20.02.2013**
(21) Anmeldenummer: 03795737.0
(22) Anmeldetag: 02.12.2003
(51) Int. Cl.: B60S 1/16

(54) **ELEKTRISCHE ANTRIEBSEINHEIT**
ELECTRIC DRIVE UNIT
UNITE D'ENTRAINEMENT ELECTRIQUE

(30) Priorität: 27.03.2003 DE 10313734
(43) Veröffentlichungstag der Anmeldung: 04.01.2006
(73) Patentinhaber: ROBERT BOSCH GMBH, 70442 Stuttgart (DE)
(72) Erfinder: HAWIGHORST, Achim, 77830 Buehlertal (DE); STUBNER, Armin, 77815 Buehl-Altschweier (DE)
(86) Internationale Anmeldenummer: PCT/DE2003/003967
(87) Internationale Veröffentlichungsnummer: WO 2004/085215

(56) Entgegenhaltungen:
- EP-A- 0 467 750
- DE-A- 4 419 769
- DE-A- 19 821 079
- DE-U- 9 017 993
- GB-A- 1 397 295
- GB-A- 2 008 863
- GB-A- 2 074 693

## Beschreibung

Die Erfindung betrifft eine elektrische Antriebseinheit, insbesondere eine elektrische Antriebeinheit für einen Scheibenwischer eines Kraftfahrzeuges.

Aus der Druckschrift DE 198 21 079 A1 ist eine elektrische Antriebseinheit bekannt, bei der ein Schneckenrad auf einer Abtriebswelle gelagert ist. Zur Einstellung eines Achsabstandes zwischen einer Ankerwelle des Antriebsmotors wird die Abtriebswelle in einer Exzenterbuchse gelagert. Die Exzenterbuchse weist Abstufungen auf und ist im Gehäuse in einer zylindrischen Bohrung durch Presspassung gehalten. Das Gehäuse mit der Bohrung wird üblicherweise durch Metallgießen hergestellt.

Aufgrund der verwendeten Schneckengetriebe können niedrige Drehzahlen des Scheibenwischers und gleichzeitig hohe Drehmomente erreicht werden. Um die an derartige Antriebseinheiten für Scheibenwischer eines Kraftfahrzeuges gestellten Geräuschanforderungen zu erfüllen, muss der Verzahnungseingriff des Schneckengetriebes unabhängig von Fertigungstoleranzen konstant bleiben. Mit Hilfe einer Verdrehung der Exzenterbuchse in der Bohrung des Gehäuses können die Fertigungstoleranzen ausgeglichen werden, in dem der Achsabstand von Abtriebswelle und Ankerwelle bei der Montage sehr exakt eingestellt wird.

Neben den Fertigungstoleranzen, die zu unterschiedlichen Abständen zwischen Ankerwelle und Abtriebswelle führen können, kann es auch aufgrund von Fertigungsungenauigkeiten vorkommen, dass die Bohrung in dem Gehäuse zur Achsrichtung der Abtriebswelle geneigt verläuft. Dies hat nach der Montage der Antriebseinheit erhöhte Druckkräfte auf die Abtriebswelle und die Exzenterhülse zur Folge, die zu einer erhöhten Abnutzung der Führung der Abtriebswelle in der Exzenterbuchse führen können.

Es ist daher Aufgabe der vorliegenden Erfindung die Abnutzung in der Exzenterbuchse zu minimieren ohne die Anforderungen an die Fertigungsgenauigkeit der Herstellung und Montage der Bauelemente zu erhöhen.

Diese Aufgabe wird durch die elektrische Antriebseinheit nach Anspruch 1 gelöst.

Weitere Ausgestaltungen der Erfindung sind in den abhängigen Ansprüchen angegeben.

Erfindungsgemäß ist eine elektrische Antriebseinheit, insbesondere für einen Scheibenwischer eines Kraftfahrzeuges vorgesehen. Die Antriebseinheit weist einen Antriebsmotor und ein Getriebe auf, wobei ein Gehäuse vorgesehen ist, in dem zumindest das Getriebe angeordnet ist. Das Getriebe umfasst eine über eine Ankerwelle mit dem Antriebsmotor verbundene Schnecke und ein auf einer Abtriebswelle gelagertes Schneckenrad auf. Die Abtriebswelle ist in einer Exzenterbuchse gelagert, die zur Einstellung des Achsabstandes zwischen der Ankerwelle und der Abtriebswelle verdrehbar und im verdrehten Zustand verdrehsicher im Gehäuse montierbar ist. Die Exzenterbuchse weist eine Lagerung auf, um die Abtriebswelle zu lagern.

Die elektrische Antriebseinheit gemäß der vorliegenden Erfindung hat den Vorteil, dass sie einfacher herstellbar ist. Denn durch das Vorsehen einer Lagerung in der Exzenterbuchse ist es möglich, dass die Richtung der Bohrung in dem Gehäuse, in der die Exzenterbuchse während der Montage eingesetzt wird, weniger exakt der Achsrichtung entspricht. Zudem wirkt bei der Montage eine geringe mechnanische Belastung auf die Lagerung, da beim Einsetzen der Exzenterbuchse eine Kraft nur an der Exzenterbuchse angelegt wird.

Die Lagerung umschließt die Abtriebswelle und nimmt Druckkräfte aufgrund von Verspannungen zwischen der Abtriebswelle und der Exzenterbuchse auf. Verspannungen können insbesondere durch nicht parallele Achsrichtungen der Abtriebswelle und der Exzenterbuchse hervorgerufen werden.

Es ist vorgesehen, dass die Lagerung ein erstes Lager und ein zweites Lager aufweist, die entlang der Abtriebswelle in der Exzenterbuchse angeordnet sind und einen Zwischenraum bilden. Der Zwischenraum dient dazu, Kapillareffekte entlang der Abtriebswelle in der Exzenterbuchse zu verringern, durch die Wasser ins Innere des Gehäuses gelangen kann. Darüber hinaus können durch das Vorsehen von zwei voneinander getrennten Lagern kleinere Lager vorgesehen werden, die kostengünstiger und bei der Montage einfacher zu handhaben sind. Darüber hinaus kann durch das Vorsehen von zwei Lagern die Länge der Lagerung beliebig angepasst werden, ohne die Lager ändern zu müssen.

Vorzugsweise weist die Lagerung ein Kunststofflager auf. Das Kunststofflager kann bei der Montage in die Exzenterbuchse eingesetzt sein und ist vorzugsweise dünnwandig in Bezug auf die Exzenterbuchse ausgebildet. Eine dünnwandige Ausbildung verbessert das Abführen von Wärme der Exzenterbuchse, und ein Einpassen eines Lagers in die Exzenterbuchse ist nicht erforderlich.

Das Lager kann auch ein Sinterlager umfassen, das in die Exzenterbuchse eingesetzt wird. Ebenso ist es möglich, dass das Lager ein Wälzlager aufweist.

Um zu verhindern, dass Schmutzpartikel durch die Exzenterbuchse ins Innere des Gehäuses gelangen können, kann die Lagerung eine oder mehrere Dichtlippen aufweisen, die im zusammengesetzten Zustand der Antriebseinheit an der Abtriebswelle anliegen. Vorzugsweise sind die Dichtlippen an dem ersten und/oder dem zweiten Lager angeordnet. Vorzugsweise ist eine Dichtlippe an dem Gehäuseäußeren zugewandten Ende der Exzenterbuchse angebracht.

Es kann vorgesehen sein, dass die Exzenterbuchse im Gehäuse durch eine Presspassung gehalten ist. Ebenso ist es möglich die Exzenterbuchse in der Bohrung des Gehäuses durch Rastelemente zu halten. Dadurch kann die eingestellte Verdrehung der Exzenterbuchse fixiert werden, so dass sich der Achsabstand zwischen Antriebswelle und Abtriebswelle nach der Montage nicht mehr ändern kann.

Insbesondere die Presspassung ermöglicht eine stufenlose Verdrehung der Exzenterbuchse, so dass sich eine äußerst präzise Einstellung des Achsabstandes zwischen der Ankerwelle und der Abtriebswelle vornehmen lässt.

Bevorzugte Ausführungsformen der Erfindung werden im folgenden anhand der beigefügten Zeichnungen näher erläutert.

Es zeigen:
Fig. 1 eine Draufsicht auf eine Antriebseinheit;
Fig. 2 eine Schnittansicht entlang der Linie II-II der Fig. 1;
Fig. 3 eine Schnittansicht eines Getriebegehäuses einer Antriebseinrichtung;
Fig. 4a eine Seitenansicht einer Exzenterhülse für eine elektrische Antriebseinheit;
Fig. 4b eine Draufsicht auf die Exzenterhülse nach Fig. 4a;
Fig. 4c eine Schnittansicht der Exzenterhülse nach Fig. 4a;
Fig. 5 eine Schnittansicht einer erfindungsgemäße Ausführungsform einer Exzenterhülse;
Fig. 6a eine weitere mögliche Ausführungsform einer Exzenterhülse;
Fig. 6b eine Draufsicht auf die Exzenterbuchse nach Fig. 6a;
Fig. 6c eine Schnittansicht der Exzenterbuchse nach Fig. 6a;
Fig. 7a eine weitere Ausführungsform der Exzenterbuchse mit Dichtlippen; und
Fig. 7b eine weitere Ausführungsform der Exzenterbuchse mit Dichtlippen und Flansch.

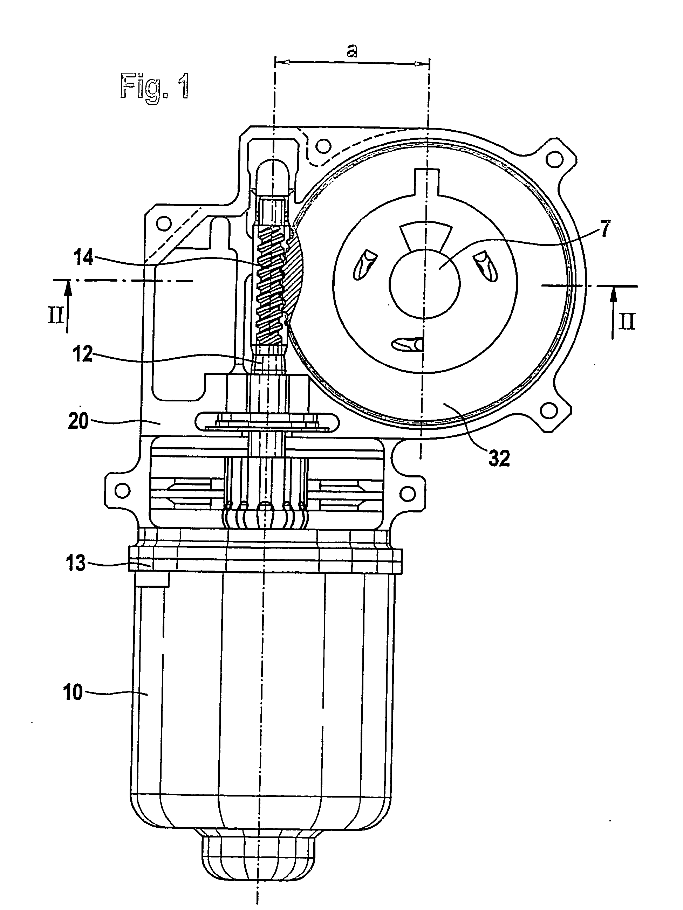

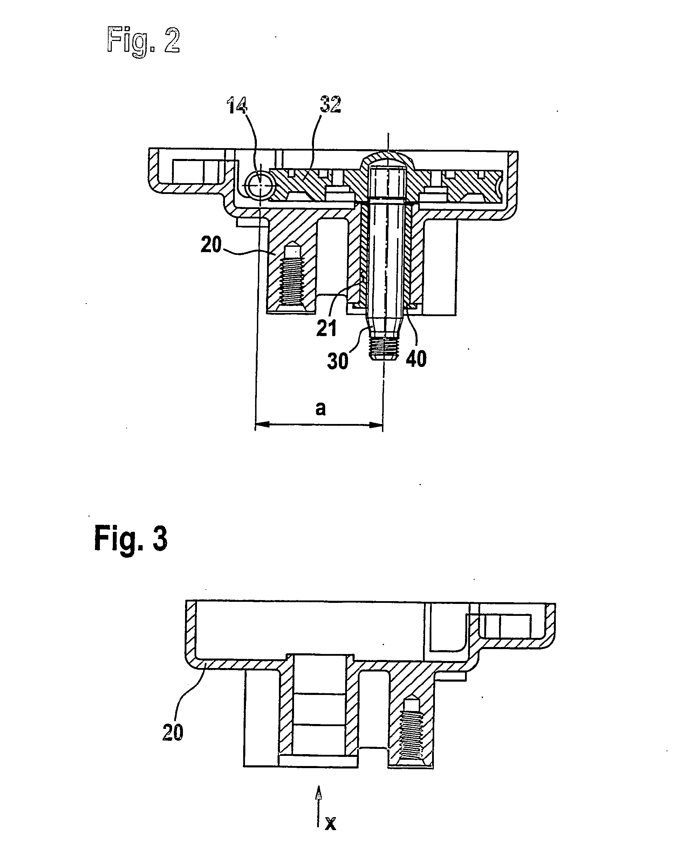

Die in Fig. 1 und Fig. 2 dargestellte elektrische Antriebseinheit für Scheibenwischer eines Kraftfahrzeuges umfasst ein im wesentlichen topfförmiges Polgehäuse 10, in dem ein Antriebsmotor (nicht gezeigt) untergebracht ist. Stirnseitig mit einem Flansch 13 des Polgehäuses 10 ist ein im wesentlichen ebenfalls topfförmiges Getriebegehäuse 20 befestigt. Der Antriebsmotor treibt eine Ankerwelle 12 an.

In dem Getriebegehäuse 20 ist ein auf einer Abtriebswelle 30 befestigtes Schneckenrad 32 angeordnet, welches in eine mit der Ankerwelle 12 des Antriebsmotors verbundene Schnecke 14 eingreift. Das Schneckengetriebe aus Schneckrad 32 und Schnecke 14 ermöglicht die bei einem Wischermotor erforderlichen Drehzahlen und Drehmomente.

Um einen exakten Achsabstand a zwischen der Ankerwelle 12 und der Abtriebswelle 30 einstellen zu können, ist die Abtriebswelle 30 in einer Exzenterbuchse 40 gelagert, die in einer Bohrung 21 in dem Getriebegehäuse 20 befestigt ist.

Der Flansch 13 erleichtert die Montage der Exzenterbuchse, da er ein Halteelement für ein Greifwerkzeug bildet. Der Flansch 13 kann jedoch auch weggelassen werden.

Die Bohrung 21 in dem Getriebegehäuse 20 kann sowohl einen einheitlichen Durchmesser haben als auch gestuft mit zwei verschiedenen Durchmessern, wie in Fig. 3 dargestellt, ausgeführt sein. Die Querschnittsveränderung ist dabei vorzugsweise in der Mitte der Bohrung 21 angeordnet, kann jedoch auch in Richtung der Enden der Bohrung 21 des Getriebegehäuses 20 angeordnet sein.

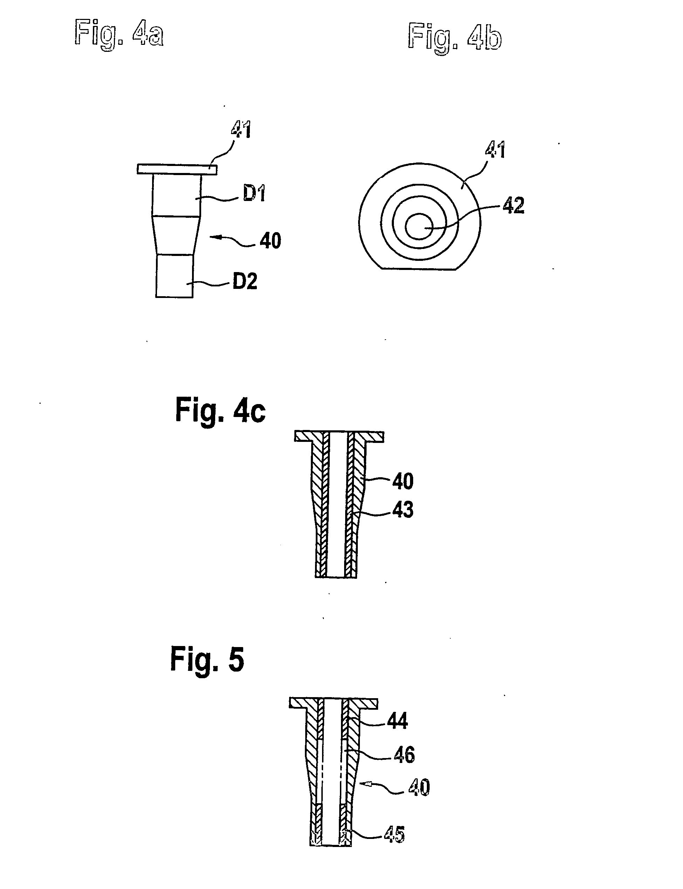

In Fig. 4a ist eine mögliche Ausführungsform einer Exzenterbuchse 40 dargestellt. Die Exzenterbuchse 40 ist zur besseren Wärmeabführung vorzugsweise aus Metall gefertigt und weist zwei verschiedene Außendurchmesser D1 und D2 auf. An einem Ende der Exzenterbuchse 40, vorzugsweise an dem Ende mit dem größeren Durchmesser D1, ist ein Flansch 41 angebracht. Durch diese Ausbildung der Exzenterbuchse 40 wird insbesondere eine Nachbearbeitung des Getriebegehäuses 20, das ein Metallgussteil ist, vermieden.

Durch die komplementäre Ausbildung der Bohrung 21, die ebenfalls zwei verschiedene Durchmesser entsprechend der Exzenterbuchse 40 aufweist, wird eine Entformung von einer Seite des Getriebegehäuses 20 ermöglicht, wodurch eine sehr gute Koaxialität der Bohrung 21 erreicht wird.

Wie in Fig. 4b dargestellt weist die Exzenterbuchse 40 eine Führungsbohrung 42 auf, die exzentrisch und parallel zur Mittelachse der Exzenterbuchse 40 versetzt angeordnet ist. Im montierten Zustand der Exzenterbuchse 40 in der Bohrung 21 bestimmt die Verdrehung der Exzenterbuchse den Achsabstand zwischen der Abtriebswelle 30 und der Ankerwelle 12. Die Verdrehung der Exzenterbuchse 40 wird so gewählt, dass ein definierter Achsabstand erreicht wird, so dass selbst größere Fertigungsabweichungen ausgeglichen werden können.

Fig. 4c zeigt, dass in der Führungsbohrung 42 der Exzenterbuchse 40 ein Lager 43 angeordnet ist. Wie in Fig. 4c dargestellt, ist das Lager 43 durchgängig und kann ein Kunststofflager, Sinterlager oder ein Wälzlager aufweist. Das Lager 43 ist im wesentlichen fest in der Führungsbohrung 42 der Exzenterbuchse 40 eingebracht und umschließt die Abtriebswelle vollständig, d.h. der Innenradius des Lagers 43 entspricht im wesentlichen dem Radius der Abriebswelle. Das Lager 43 dient dazu, Verspannungen zwischen der Abtriebswelle und der Exzenterbuchse 40 aufzunehmen, die ansonsten zu einem verstärkten Abrieb bzw. erhöhtem Verschleiß der Exzenterbuchse 40 der Antriebseinheit führen würde. Insbesondere bei der Montage einer einstückigen Exzenterbuchse ohne Lager treten starke Spannungen auf die Führungsbohrung auf, in der sich die Abtriebswelle bewegt. Dies kann durch die mehrteilige Ausführung einer Exzenterbuchse mit einer eingesetzten Lagerung vermieden werden.

Das Lager 43 ist vorzugsweise dünnwandig ausgeführt, um durch Reibung entstehende Wärme schnell über die Exzenterbuchse 40 an das Gehäuse weiterzugeben. Die Wandung des Lagers 43 ist dabei so gewählt, um eine Beschädigung oder einen erhöhten Verschleiß durch eine Wärmeentwicklung auszuschließen.

Wie in Fig. 5 dargestellt, ist erfindungsgemäß vorgeschen die Lagerung zweiteilig, nämlich mit einem ersten Lager 44 und einem zweiten Lager 45 aufzubauen. Die beiden Lager 44, 45 haben jeweils eine Länge, wobei die gemeinsame Länge kleiner ist als die Länge der Führungsbohrung 42 der Exzenterbuchse 40 und sind vorzugsweise an den beiden entgegengesetzten Enden der Hülse angeordnet, so dass ein Zwischenraum zwischen den beiden Lagern 44, 45 gebildet wird.

Der Zwischenraum ist vorzugsweise mit einem Schmiermittel gefüllt, um die Reibung der Abtriebswelle weiter zu verringern. Der Zwischenraum 46 kann weiterhin aber auch mit einem anderen Material oder mit Luft gefüllt sein. Der Zwischenraum hat weiterhin den Vorteil, Kapillareffekte, die sich zwischen der Abtriebswelle 30 und den Innenflächen der Lager 44, 45 bilden, zu verringern. Kapillareffekte können dazu führen, dass Feuchtigkeit ins Innere des Gehäuses 20 gelangt. Darüber hinaus kann die Länge der Lagerung der Abtriebswelle frei gewählt werden, ohne die Lager 44, 45 zu verändern. Lediglich die Länge des Zwischenraums 46 wird dabei verändert.

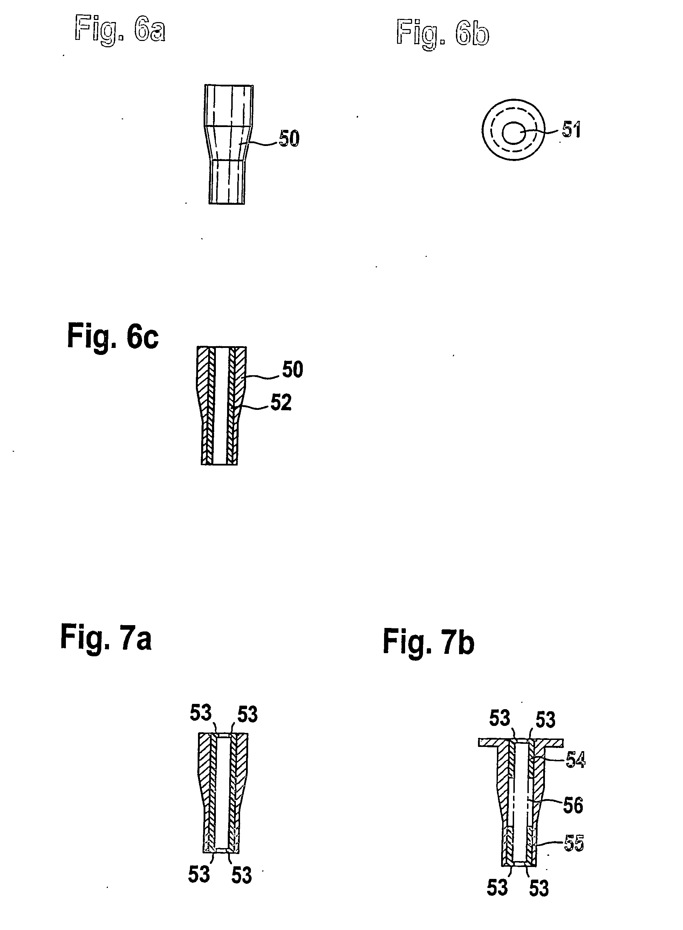

In Fig. 6 ist eine weitere Ausführungsform einer Exzenterhülse 50 dargestellt. Die Exzenterhülse 50 weist im Unterschied zur Exzenterhülse nach Fig. 4a keinen Flansch an einem Ende auf. Die Exzenterhülse 50 weist eine exzentrische Bohrung 51 auf, die im wesentlichen achsparallel verläuft. In Fig. 6c ist dargestellt, wie ein Lager in der Exzenterbuchse 50 angeordnet sein kann. Dieses Lager 52 kann, wie in Fig. 7a dargestellt, Dichtlippen 53 aufweisen, die an einem oder beiden Enden des Lagers bzw. der Exzenterbuchse 50 angeordnet sind.

Werden statt eines einzigen Lagers zwei oder mehr Lager 54, 55 verwendet, so kann jedes Lager 54, 55 an seinem einem Ende der Exzenterbuchse 50 zugewandten Ende eine Dichtlippe 53 aufweisen. Die Dichtlippe 53 verhindert, dass Schmutzpartikel vom äußeren der Antriebseinheit ins innere des Getriebegehäuses 20 gelangen können.

Bei der erfindungsgemäßen Verwendung von zwei Lagern 54, 55 kann ein dazwischenliegender Hohlraum 56 das Eindringen von Feuchtigkeit in den Innenraum des Getriebegehäuses 20 verhindern. Zudem hat die Ausbildung des Lagers, insbesondere wenn das Lager nachträglich nach der Herstellung der Exzenterbuchse 40, 50 eingesetzt wurde, den Vorteil, dass Material für das Lager eingespart werden kann. Da die Abtriebswelle 30 sich beim Betrieb der Antriebseinheit nicht mehr an der bloßen Innenwand der Führungsbohrung der Exzenterbuchse 40, 50 bewegt, sondern in einem dort angeordneten Lager, kann der Aufwand zur Herstellung einer möglichst exakten Führungsbohrung reduziert werden.

### Bezugszeichenliste

- 10: Polgehäuse
- 12: Ankerwelle
- 13: Flansch des Polgehäuses
- 14: Schnecke
- 20: Getriebegehäuse
- 21: Bohrung
- 30: Abtriebswelle
- 32: Schneckenrad
- 40: Exzenterbuchse
- 41: Flansch
- 42: Führungsbohrung
- 43: Lager
- 44: erster Lagerabschnitt
- 45: zweiter Lagerabschnitt
- 46: Zwischenraum
- 50: Exzenterbuchse
- 51: Führungsbohrung
- 52: Lager
- 53: Dichtlippe
- 54: erster Lagerabschnitt
- 55: zweiter Lagerabschnitt
- 56: Zwischenraum

## Patentansprüche

1. Elektrische Antriebseinheit, insbesondere für einen Scheibenwischer eines Kraftfahrzeuges, mit einem Antriebsmotor und mit einem Getriebe, wobei ein Gehäuse (20) vorgesehen ist, in dem zumindest das Getriebe angeordnet ist, wobei das Getriebe eine über eine Ankerwelle (12) mit dem Antriebsmotor verbundene Schnecke (14) und ein auf einer Abtriebswelle (30) gelagertes Schneckenrad (32) aufweist, wobei die Abtriebswelle (30) in einer Exzenterbuchse (40, 50) gelagert ist, die zur Einstellung des Achsabstandes zwischen der Ankerwelle (12) und der Abtriebswelle (30) verdrehbar und im verdrehten Zustand verdrehsicher im Gehäuse (20) montierbar ist,
**dadurch gekennzeichnet, dass**
die Exzenterbuchse (40, 50) eine Lagerung (43, 52) aufweist, um die Abtriebswelle (30) zu lagern,
wobei die Lagerung ein erstes Lager (44, 54) und ein zweites Lager (45, 55) aufweist, die entlang der Abtriebswelle (30) in der Exzenterbuchse (40, 50) angeordnet sind und einen Zwischenraum (46, 56) bilden.

2. Antriebseinheit nach Anspruch 1, **dadurch gekennzeichnet, dass** die Lagerung (43, 52) ein Kunststofflager aufweist.

3. Antriebseinheit nach Anspruch 2, **dadurch gekennzeichnet, dass** das Kunststofflager (43, 52) dünnwandig ausgeführt ist, um Wärme schnell abzuführen.

4. Antriebseinheit nach Anspruch 1, **dadurch gekennzeichnet, dass** die Lagerung (43, 52) ein Sinterlager aufweist.

5. Antriebseinheit nach Anspruch 1, **dadurch gekennzeichnet, dass** die Lagerung (43, 52) ein Wälzlager aufweist.

6. Antriebseinheit nach Anspruch 1 bis 5, **dadurch gekennzeichnet, dass** die Lagerung (43, 52) eine oder mehrere Dichtlippen (53) aufweist.

7. Antriebseinheit nach Anspruch 6, **dadurch gekennzeichnet, dass** das erste und/oder das zweite Lager (44, 54, 45, 55) eine Dichtlippe (53) aufweist.

8. Antriebseinheit nach Anspruch 1 bis 7, **dadurch gekennzeichnet, dass** die Exzenterbuchse (40, 50) Schmiernuten aufweist.

9. Antriebseinheit nach Anspruch 1 bis 8, **dadurch gekennzeichnet, dass** die Exzenterbuchse (40, 50) im Gehäuse (20) durch Presspassung gehalten ist.

10. Antriebseinheit nach Anspruch 1 bis 8, **dadurch gekennzeichnet, dass** die Exzenterbuchse (40, 50) im Gehäuse (20) durch Rastelemente gehalten ist.

## Claims

1. Electric drive unit, in particular for a windscreen wiper of a motor vehicle, with a driving motor and with a gearing, wherein a housing (20) is provided, in which at least the gearing is arranged, wherein the gearing has a worm (14) connected to the driving motor via an armature shaft (12) and a worm wheel (32) mounted on an output shaft (30), wherein the output shaft (30) is mounted in an eccentric bushing (40, 50) which is rotatable in order to adjust the axial distance between the armature shaft (12) and the output shaft (30) and, in the rotated state, is fittable in the housing (20) in a manner secured against rotation, **characterized in that** the eccentric bushing (40, 50) has a bearing arrangement (43, 52) in order to support the output shaft (30), wherein the bearing arrangement has a first bearing (44, 54) and a second bearing (45, 55) which are arranged along the output shaft (30) in the eccentric bushing (40, 50) and form a gap (46, 56).

2. Drive unit according to Claim 1, **characterized in that** the bearing arrangement (43, 52) has a plastics bearing stop.

3. Drive unit according to Claim 2, **characterized in that** the plastics bearing (43, 52) is of thin-walled design in order rapidly to conduct away heat.

4. Drive unit according to Claim 1, **characterized in that** the bearing arrangement (43, 52) has a sintered bearing.

5. Drive unit according to Claim 1, **characterized in that** the bearing arrangement (43, 52) has a rolling contact bearing.

6. Drive unit according to Claims 1 to 5, **characterized in that** the bearing arrangement (43, 52) has one or more sealing lips (53).

7. Drive unit according to Claim 6, **characterized in that** the first and/or the second bearing (44, 54, 45, 55) have/has a sealing lip (53).

8. Drive unit according to Claims 1 to 7, **characterized in that** the eccentric bushing (40, 50) has lubricating grooves.

9. Drive unit according to Claims 1 to 8, **characterized in that** the eccentric bushing (40, 50) is held in the housing (20) by a press fit.

10. Drive unit according to Claims 1 to 8, **characterized in that** the eccentric bushing (40, 50) is held in the housing (20) by latching elements.

## Revendications

1. Unité d'entraînement électrique, en particulier pour un essuie-glace d'un véhicule automobile, comprenant un moteur d'entraînement et boîte de vitesses, un boîtier (20) étant prévu, dans lequel est disposée au moins la boîte de vitesses, la boîte de vitesses présentant une vis sans fin (14) connectée au moteur d'entraînement par le biais d'un arbre d'induit (12) et une roue à denture hélicoïdale (32) montée sur un arbre de prise de force (30), l'arbre de prise de force (30) étant monté dans une douille excentrique (40, 50) qui peut tourner pour ajuster la distance axiale entre l'arbre d'induit (12) et l'arbre de prise de force (30) et qui peut être montée dans le boîtier (20) de manière solidaire en rotation dans l'état tourné,
**caractérisée en ce que**
la douille excentrique (40, 50) présente un support sur palier (43, 52) pour supporter l'arbre de prise de force (30),
le support sur palier présentant un premier palier (44, 54) et un deuxième palier (45, 55) qui sont disposés le long de l'arbre de prise de force (30) dans la douille excentrique (40, 50) et qui forment un espace intermédiaire (46, 56).

2. Unité d'entraînement selon la revendication 1, **caractérisée en ce que** le support sur palier (43, 52) présente un palier en plastique.

3. Unité d'entraînement selon la revendication 2, **caractérisée en ce que** le palier en plastique (43, 52) est réalisé avec une paroi mince afin de dissiper rapidement la chaleur.

4. Unité d'entraînement selon la revendication 1, **caractérisée en ce que** le support sur palier (43, 52) présente un palier fritté.

5. Unité d'entraînement selon la revendication 1, **caractérisée en ce que** le support sur palier (43, 52) présente un palier à roulement.

6. Unité d'entraînement selon les revendications 1 à 5, **caractérisée en ce que** le support sur palier (43, 52) présente une ou plusieurs lèvres d'étanchéité (53).

7. Unité d'entraînement selon la revendication 6, **caractérisée en ce que** le premier et/ou le deuxième palier (44, 54, 45, 55) présentent une lèvre d'étanchéité (53).

8. Unité d'entraînement selon la revendication 1 à 7, **caractérisée en ce que** la douille excentrique (40, 50) présente des rainures de lubrification.

9. Unité d'entraînement selon les revendications 1 à 8, **caractérisée en ce que** la douille excentrique (40, 50) est maintenue dans le boîtier (20) par ajustement serré.

10. Unité d'entraînement selon les revendications 1 à 8, **caractérisée en ce que** la douille excentrique (40, 50) est maintenue dans le boîtier (20) par des éléments d'encliquetage.
